# EUROPEAN PATENT SPECIFICATION

(11) **EP 3 576 964 B1**
(45) Date of publication and mention of the grant of the patent: **04.08.2021**
(21) Application number: 18748099.1
(22) Date of filing: 25.01.2018
(51) Int. Cl.: B60C 9/00, B60C 9/22, B60C 9/04, B60C 9/20

(54) **HIGH PERFORMANCE AGRICULTURAL TIRE**
LANDWIRTSCHAFTLICHER HOCHLEISTUNGSREIFEN
PNEU AGRICOLE HAUTE PERFORMANCE

(30) Priority: 31.01.2017 US 201762452553 P
(43) Date of publication of application: 11.12.2019
(73) Proprietor: Bridgestone Americas Tire Operations, LLC, Nashville, TN 37201 (US)
(72) Inventor: WALTERS, Jacob L., Medina, Ohio 44256 (US); RIMAI, Benjamin E., Copley, Ohio 44321 (US); KRESGE, Chad J., Clover, South Carolina 29710 (US); DINGER, Lisa M., Brunswick, Ohio 44212 (US); THOMAS, Matthew W., Madison, TN 37115 (US); CARDINALE, Matthew L., Johnston, IA 50131 (US); PARA, Jason J., Franklin, TN 37067 (US)
(74) Representative: Oxley, Robin John George
(86) International application number: PCT/US2018/015168
(87) International publication number: WO 2018/144304

(56) References cited:
- EP-A1- 2 826 641
- EP-A2- 1 559 587
- WO-A1-2019/037903
- US-A- 4 850 412
- US-A- 5 855 704
- US-A1- 2007 137 754
- US-A1- 2016 083 567
- US-B1- 6 634 399
- US-B2- 7 022 757

## Description

### TECHNICAL FIELD

This technology relates to the structure and composition of agricultural (Ag) tires.

### BACKGROUND

Ag tires are typically operated under conditions that differ substantially from those encountered by passenger tires and other non-Ag tires. Ag tires may thus have structural features, such as treads, belt plies, and body plies that are configured for performance characteristics uniquely required by Ag tires. Attention is drawn to the disclosure of US2016/083567A1.

### SUMMARY

The present invention provides an agricultural tire as claimed in claim 1. In particular examples, the polyamide yarns may have deniers within the range of about 1500 to about 1900. The cord angles may be within a range of about 74 degrees to about 90 degrees from an axial direction.

### BRIEF DESCRIPTION OF THE DRAWINGS

Figure 1 is a sectional view of an Ag tire.
Figure 2 is a schematic view of a part of the tire of Fig. 1.
Figure 3 is a view similar to Fig. 2, showing a tire in an alternate embodiment.

### DETAILED DESCRIPTION

The structures illustrated in the drawings include examples of the elements recited in the claims. The illustrated structures thus include examples of how a person of ordinary skill in the art can make and use the claimed invention. These examples are described to meet the enablement and best mode requirements of the patent statute without imposing limitations that are not recited in the claims. One or more of the elements of one embodiment may be used in combination with, or as a substitute for, one or more elements another as needed for any particular implementation of the invention.

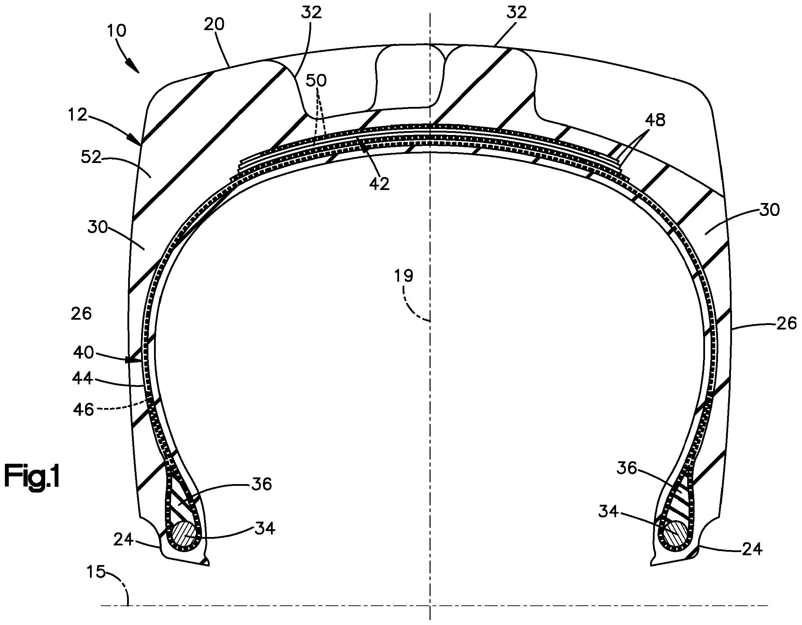

As shown for example in the embodiment of Fig. 1, an Ag tire 10 includes a toroidal tire structure 12 having an axis of rotation 15. The tire structure 12 reaches circumferentially about the axis 15, and is substantially symmetrical about an equatorial plane 19 perpendicular to the axis 15. Major portions of the tire structure 12 include a tread 20, a pair of beads 24, and opposite sidewalls 26.

Each bead 24 includes a bead core 34 and an apex strip 36. The tread 20 extends laterally across the equatorial plane 19 between a pair of shoulder portions 30 at the upper ends of the sidewalls 26. In the illustrated embodiment, the tread 20 includes circumferentially staggered lugs 32 converging axially and circumferentially toward the equatorial plane 19. Such treads are shown, for example, in U.S. Patents Nos. 8,905,097 and 9,073,389.

Other portions of the tire structure 12 include a carcass 40 and a belt layer 42. The carcass 40 comprises body plies 44 of rubber-coated cords 46, which as shown partially in Fig. 1, reach radially between and around the beads 24. The belt layer 42 comprises belt plies 48 of rubber-coated cords 50 extending circumferentially over the body plies 44. The sidewalls 26 extend over the carcass structure 40 radially from the beads 24 to the shoulder portions 30 of the tread 20.

The tread 20, the beads 24, and the sidewalls 26 together enclose the other components of the tire structure 12 within a continuous body 52 of vulcanized rubber. As an Ag tire, the tire 10 has a tread 20 that is substantially larger, both actually and proportionately, than a tread normally found on a passenger tire or other non-Ag tires. The entire body 52 of vulcanized rubber is likewise larger than non-Ag counterparts. As a result, vulcanized rubber provides about 90 percent or more of the total weight of the tire 10, and is preferably within a range of about 90 to about 95 percent of the total weight of the tire 10, whereas non-Ag tires are known to include vulcanized rubber in lesser amounts.

As a performance-enhancing feature, the tire structure 12 is provided with high strength plies. These are provided as both body plies 44 and belt plies 48. High strength plies include one or more radial body plies 44. High strength plies include one or more circumferential belt plies 48. In each case, the high strength plies contain cords that are formed of yarns, including polyamide yarns, and have individual cord tensile strengths within a range of about 400 N to about 700 N. Such individual cord tensile strengths may be obtained by including polyamide yarns having deniers within the range of about 1500 to about 1900.

For example, specific constructions may include:
(1) Polyester cords made from 4 yarns each having 1500 denier (1500/4) with a total cord tensile strength of at least 445 N.
(2) Polyester cords made from 6 yarns each having 1500 denier (1500/6) with a total cord tensile strength of at least 647 N.
(3) Nylon 66 cords made from 4 yarns each having 1900 denier (1900/4) with a total cord strength of at least 599 N.

In the given example of a tire structure 12, the carcass 40 and the belt layer 42 include only the high strength plies. Each ply 44 and 48 contains only cords 46 or 50 that are formed entirely of polyamide yarns having deniers within the range of about 1500 to about 1900.

Stated more specifically, in this example of a tire structure 12, both the body plies 44 and the belt plies 48 are all high strength plies. The high strength plies 44 and 48 contain only cords that are formed of yarns, including polyamide yarns, and that have individual cord tensile strengths within a range of about 400 N to about 700 N. The polyamide yarns have deniers within the range of about 1500 to about 1900. The high strength plies include cords in which the yarns consist of polyamide yarns having deniers within the range of about 1500 to about 1900, and include plies in which all cords are formed of yarns consisting of polyamide yarns having deniers within the range of about 1500 to about 1900.

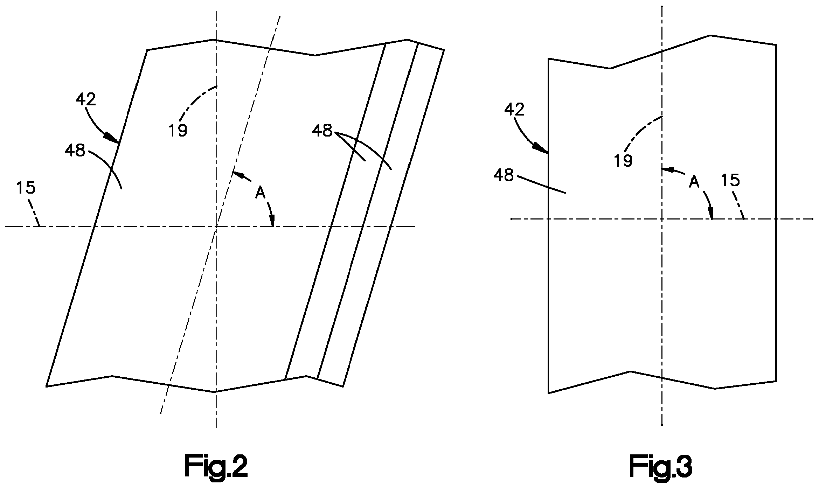

As another performance-enhancing feature, any one or more of the belt plies 48 may have a cord angle A of about 74 degrees or more from the direction of the axis 15, as indicated schematically in Fig. 2. In the illustrated tire structure 12, each belt ply 46 has a cord angle within a range of about 74 degrees to about 90 degrees from the axial direction.

In another embodiment, the belt layer 42 consists of only a single belt ply 48 reaching in the circumferential direction, i.e. with a cord angle A equal or substantially equal to 90 degrees from the axial direction, as shown partially in Fig. 3. The single belt ply 48 is preferably constructed as a high strength ply as described above.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available or prudent in manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10% of the number. In other words, "about 10" may mean from 9 to 11.

As stated above, while the present application has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses without departing from the scope of the invention defined by the appended claims.

## Claims

1. An agricultural tire (10), comprising:
a toroidal tire structure (12) having a tread portion (20), a pair of bead portions (24), and opposite sidewall portions (26), and further having body plies (44), belt plies (48), or both body plies (44) and belt plies (48); wherein:
the toroidal tire structure (12) contains vulcanized rubber in the amount of about 90 percent or more by weight;
the plies (44, 48) include high strength plies containing cords (46, 50) that are formed of yarns, including polyamide yarns, and that have individual cord tensile strengths within a range of 400 N to 700 N; and
**characterized in that** the high strength plies include one or more radial body plies (44) and one or more circumferential belt plies (48).

2. An agricultural tire (10) as defined in claim 1, wherein the plies (44, 48) include only the high strength plies.

3. An agricultural tire (10) as defined in claim 1, wherein the high strength plies contain only cords (46, 50) that are formed of yarns, including polyamide yarns, and that have individual cord tensile strengths within a range of 400 N to 700 N.

4. An agricultural tire (10) as defined in claim 1, wherein the polyamide yarns have deniers within a range of 1500 to 1900.

5. An agricultural tire (10) as defined in claim 1, wherein the high strength plies include cords (46, 50) in which the yarns consist of polyamide yarns having deniers within a range of 1500 to 1900.

6. An agricultural tire (10) as defined in claim 1, wherein the high strength plies include plies (44, 48) in which all cords (46, 50) are formed of yarns consisting of polyamide yarns having deniers within a range of 1500 to 1900.

7. An agricultural tire (10) as defined in claim 1, wherein the plies (44, 48) include radial body plies (44) and only a single circumferential belt ply (48), and the single circumferential belt ply (48) is one of the high strength plies.

8. An agricultural tire (10) as defined in claim 1, wherein the plies include circumferential belt plies (48) having cords (50) at angles (A) of 74 degrees or more from an axial direction.

9. An agricultural tire (10) as defined in claim 8, wherein the cord angles (A) are within a range of 74 degrees to 90 degrees from an axial direction

10. An agricultural tire (10) as defined in claim 1, wherein
the plies (44, 48) include high strength plies containing cords that are formed of polyamide yarns having deniers within a range of 1500 to 1900; and
the plies (44, 48) include circumferential belt plies (48) having cords at angles within a range of 74 degrees to 90 degrees from an axial direction

## Patentansprüche

1. Landwirtschaftsreifen (10), umfassend:
eine torusförmige Reifenstruktur (12) mit einem Laufflächenabschnitt (20), einem Paar Wulstabschnitten (24) und gegenüberliegenden Seitenwandabschnitten (26) und ferner mit Unterbaulagen (44), Gürtellagen (48) oder sowohl Unterbaulagen (44) als auch Gürtellagen (48); worin:
die torusförmige Reifenstruktur (12) vulkanisierten Kautschuk in der Menge von etwa 90 Gewichtsprozent oder mehr enthält;
die Lagen (44, 48) hochfeste Lagen einschließen, die Corde (46, 50) enthalten, die aus Garnen, einschließlich Polyamidgarnen, gebildet sind und die individuelle Cordzugfestigkeiten innerhalb eines Bereichs von 400 N bis 700 N aufweisen; und
**dadurch gekennzeichnet, dass**
die hochfesten Lagen eine oder mehrere radiale Unterbaulagen (44) und eine oder mehrere Umfangsgürtellagen (48) einschließen.

2. Landwirtschaftsreifen (10) nach Anspruch 1, wobei die Lagen (44, 48) nur die hochfesten Lagen einschließen.

3. Landwirtschaftsreifen (10) nach Anspruch 1, wobei die hochfesten Lagen nur Corde (46, 50) enthalten, die aus Garnen, einschließlich Polyamidgarnen, gebildet sind und die individuelle Cordzugfestigkeiten innerhalb eines Bereichs von 400 N bis 700 N aufweisen.

4. Landwirtschaftsreifen (10) wie nach Anspruch 1, wobei die Polyamidgarne Fadenstärken innerhalb eines Bereichs von 1500 bis 1900 aufweisen.

5. Landwirtschaftsreifen (10) wie nach Anspruch 1, wobei die hochfesten Lagen Corde (46, 50) einschließen, in denen die Garne aus Polyamidgarnen mit Fadenstärken innerhalb eines Bereichs von 1500 bis 1900 bestehen.

6. Landwirtschaftsreifen (10) nach Anspruch 1, wobei die hochfesten Lagen Lagen (44, 48) einschließen, in denen alle Corde (46, 50) aus Garnen gebildet sind, die aus Polyamidgarnen mit Fadenstärken innerhalb eines Bereichs von 1500 bis 1900 bestehen.

7. Landwirtschaftsreifen (10) nach Anspruch 1, wobei die Lagen (44, 48) radiale Unterbaulagen (44) und nur eine einzelne Umfangsgürtellage (48) einschließen und die einzelne Umfangsgürtellage (48) eine der hochfesten Lagen ist.

8. Landwirtschaftsreifen (10) nach Anspruch 1, wobei
die Lagen Umfangsgürtellagen (48) mit Corden (50) in Winkeln (A) von 74 Grad oder mehr von einer axialen Richtung einschließen.

9. Landwirtschaftsreifen (10) nach Anspruch 8, wobei die Cordwinkel (A) innerhalb eines Bereichs von 74 Grad bis 90 Grad von einer axialen Richtung liegen.

10. Landwirtschaftsreifen (10) nach Anspruch 1, wobei
die Lagen (44, 48) hochfeste Lagen einschließen, die Corde enthalten, die aus Polyamidgarnen mit Fadenstärken innerhalb eines Bereichs von 1500 bis 1900 gebildet sind; und
die Lagen (44, 48) Umfangsgürtellagen (48) mit Corden in Winkeln innerhalb eines Bereichs von 74 Grad bis 90 Grad von einer axialen Richtung einschließen.

## Revendications

1. Pneu agricole (10), comprenant :
une structure toroïdale de pneu (12) ayant une partie de bande de roulement (20), une paire de parties de talon (24), et des parties de flanc opposées (26), et ayant en outre des nappes carcasses (44), des nappes de ceinture (48), ou à la fois des nappes carcasses (44) et des nappes de ceinture (48) ; dans lequel :
la structure toroïdale de pneu (12) contient du caoutchouc vulcanisé dans la quantité d'environ 90 pour cent ou plus en poids ;
les nappes (44, 48) incluent des nappes à haute résistance contenant des câbles (46, 50) qui sont formés de fils, incluant des fils de polyamide, et qui ont des résistances à la traction de câble individuel dans une plage de 400 N à 700 N ; et
**caractérisé en ce que**
les nappes à haute résistance incluent une ou plusieurs nappes carcasses radiales (44) et une ou plusieurs nappes de ceinture circonférentielles (48).

2. Pneu agricole (10) tel que défini dans la revendication 1, dans lequel les nappes (44, 48) incluent uniquement les nappes à haute résistance.

3. Pneu agricole (10) tel que défini dans la revendication 1, dans lequel les nappes à haute résistance contiennent uniquement des câbles (46, 50) qui sont formés de fils, incluant des fils de polyamide, et qui ont des résistances à la traction de câble individuel dans une plage de 400 N à 700 N

4. Pneu agricole (10) tel que défini dans la revendication 1, dans lequel les fils de polyamide ont des deniers dans une plage de 1500 à 1900.

5. Pneu agricole (10) tel que défini dans la revendication 1, dans lequel les nappes à haute résistance incluent des câbles (46, 50) dans lesquels les fils sont constitués de fils de polyamide ayant des deniers dans une plage de 1500 à 1900.

6. Pneu agricole (10) tel que défini dans la revendication 1, dans lequel les nappes à haute résistance incluent des nappes (44, 48) dans lesquelles tous les câbles (46, 50) sont formés de fils constitués de fils de polyamide ayant des deniers dans une plage de 1500 à 1900.

7. Pneu agricole (10) tel que défini dans la revendication 1, dans lequel les nappes (44, 48) incluent des nappes carcasses radiales (44) et une seule nappe de ceinture circonférentielle (48), et la seule nappe de ceinture circonférentielle (48) est une parmi les nappes à haute résistance.

8. Pneu agricole (10) tel que défini dans la revendication 1, dans lequel
les nappes incluent des nappes de ceinture circonférentielles (48) ayant des câbles (50) à des angles (A) de 74 degrés ou plus par rapport à une direction axiale.

9. Pneu agricole (10) tel que défini dans la revendication 8, dans lequel les angles de câble (A) sont dans une plage de 74 degrés à 90 degrés par rapport à une direction axiale

10. Pneu agricole (10) tel que défini dans la revendication 1, dans lequel
les nappes (44, 48) incluent des nappes à haute résistance contenant des câbles qui sont formés de fils de polyamide ayant des deniers dans une plage de 1500 à 1900 ; et
les nappes (44, 48) incluent des nappes de ceinture circonférentielles (48) ayant des câbles à des angles dans une plage de 74 degrés à 90 degrés par rapport à une direction axiale
